# EUROPEAN PATENT APPLICATION

(11) **EP 3 975 020 A1**
(43) Date of publication of application: **30.03.2022**
(21) Application number: 20217656.6
(22) Date of filing: 29.12.2020
(51) Int. Cl.: G06F 21/57, G06F 21/60, G06F 8/65, H04L 29/08, H04L 29/06, H04L 9/08, H04L 9/12, H04L 9/30

(54) **SYSTEM AND METHOD FOR SECURELY TRANSMITTING ELECTRONIC INFORMATION**

(30) Priority: 28.09.2020 TW 109133710
(71) Applicant: Eco-Luxury Technology Co., Ltd., Zhubei City, Hsinchu County 302 (TW)
(72) Inventor: LAI, YU-CHENG, Zhubei City, Hsinchu County 302 (TW)
(74) Representative: Bandpay & Greuter

(57) **Abstract**

A system and a method for securely transmitting electronic information, which encrypt an electronic information before the electronic information is transmitted between information nodes and decrypt the encrypted electronic information after the encrypted electronic information is received. Therefore, it is difficult to crack the encrypted electronic information even if the encrypted electronic information is stolen during a transmission process, whereby the electronic information is securely transmitted. At the same time, by means of signing and verification, the unit that receives the electronic information can determine whether the received electronic information is from the correct unit, and it can also ensure that only the correct receiving unit can use the electronic information, whereby the integrity of data verification is achieved. Therefore, the invention provides a process of confidentiality and integrity and has more applicability than the prior art.

## Description

### BACKGROUND OF THE INVENTION

### Field of Invention

The invention relates to the technical field of secure transmission of electronic information, and more particularly to a system and a method for securely transmitting electronic information between information nodes.

### Related Art

In the manufacturing process of electronic devices, in addition to the production of chip as a hardware, there is also software or firmware or data required for the operation of the chip. After the software or firmware or data is developed by the development unit, it must be transmitted to the production unit. After the production unit burns and stores the software or firmware or data into the chip, the chip can operate normally.

In the process of transmitting the software or firmware or data from the development unit to the production unit, the software or firmware or data is usually first transmitted to the production management department, and then transmitted from the production management department to the production unit, and finally the software or firmware or data is burned and stored into the chip with manufacturing equipment of the production unit. Since the software or firmware or data can drive the chip to produce a desired function, the development of the software or firmware not only requires to invest considerable amounts in research and development costs, but is also an intellectual achievement attained with the knowledge of the developers. Therefore, if the software or firmware or data is stolen during the transmission process between the units, it may be illegally copied, tampered with or cracked.

### SUMMARY OF THE INVENTION

In view of the aforementioned problem, an object of the invention is to provide a system and a method for securely transmitting electronic information, which encrypt an electronic information before the electronic information is transmitted between information nodes and decrypt the encrypted electronic information after the encrypted electronic information is received. Therefore, it is difficult to crack the encrypted electronic information even if the encrypted electronic information is stolen during a transmission process, whereby the electronic information is securely transmitted. At the same time, by means of signing and verification, the unit that receives the electronic information can determine whether the received electronic information is from the correct unit, and it can also ensure that only the correct receiving unit can use the electronic information, whereby the integrity of data verification is achieved. In general, if the industry establishes a process of confidentiality and integrity, the procedures are often complicated. If the process must be examined by several persons for the procedures to proceed, it will take much time and effort. The system and the method for securely transmitting electronic information of the invention are capable of solving this problem and have more applicability than the prior art. One embodiment of the system for securely transmitting electronic information of the invention is used to securely transmit an electronic information to an electronic device, the system comprises: a first information node, a first security unit, a second information node, a second security unit and a manufacturing module. The first security unit is connected to the first information node, the first information node receives the electronic information, the first security unit has a first public key, a first private key and a second public key, wherein the first public key and the first private key are generated from the first security unit, the second public key is generated from the second security unit; the second security unit is connected to the second information node, transmission of information of the second information node is connected to the manufacturing module, the manufacturing module is connected to the electronic device, the second security unit has the second public key, a second private key and the first public key, wherein the second public key and the second private key are generated from the second security unit, and the first public key is generated from the first security unit.

In another embodiment, one embodiment of the method for securely transmitting electronic information of the invention comprises the following steps of: providing a first information node, a second information node, a first security unit and a second security unit, connecting the first security unit to the first information node, connecting the second security unit to the second information node, connecting the second information node to a manufacturing module; the first security unit generating a first public key and a first private key, the second security unit generating a second public key and a second private key; the first security unit transmitting the first public key to the second security unit, the second security unit transmitting the second public key to the first security unit; encrypting and signing an electronic information corresponding to an electronic device by the first security unit connected to the first information node to generate a first encrypted electronic information; transmitting the first encrypted electronic information to the second information node, verifying and decrypting the first encrypted electronic information by the second security unit to restore the verified and decrypted first encrypted electronic information into the electronic information; and transmitting the electronic information via the second information node and the manufacturing module using a security mechanism and storing the electronic information in the electronic device.

In the system and the method for securely transmitting electronic information of the invention, when the electronic information is transmitted between the information nodes, the transmitted electronic information can be encrypted and signed, and then the electronic information is verified and decrypted at the receiving information node, thereby a validity of the transmitted electronic information can be verified to prevent the electronic information from being stolen or copied, and increase the security of transmission of the electronic information.

### BRIEF DESCRIPTION OF THE DRAWINGS

FIG. 1A is a block diagram of a first embodiment of a system for securely transmitting electronic information of the invention;
FIG. 1B is a block diagram of a second embodiment of the system for securely transmitting electronic information of the invention;
FIG. 1C is a block diagram of a third embodiment of the system for securely transmitting electronic information of the invention;
FIG. 1D is a block diagram of a fourth embodiment of the system for securely transmitting electronic information of the invention;
FIGS. 2A to 2C are flowcharts of a first embodiment of a method for securely transmitting electronic information of the invention;
FIGS. 3A and 3B are sequence diagrams of the first embodiment of the method for securely transmitting electronic information of the invention;
FIGS. 4A to 4C are flowcharts of a second embodiment of the method for securely transmitting electronic information of the invention;
FIGS. 5A and 5B are sequence diagrams of the second embodiment of the method for securely transmitting electronic information of the invention;
FIGS. 6A to 6C are flowcharts of a third embodiment of the method for securely transmitting electronic information of the invention;
FIGS. 7A and 7B are sequence diagrams of the third embodiment of the method for securely transmitting electronic information of the invention;
FIGS. 8A to 8C are flowcharts of a fourth embodiment of the method for securely transmitting electronic information of the invention; and
FIGS. 9A and 9B are sequence diagrams of the fourth embodiment of the method for securely transmitting electronic information of the invention.

### DETAILED DESCRIPTION OF THE INVENTION

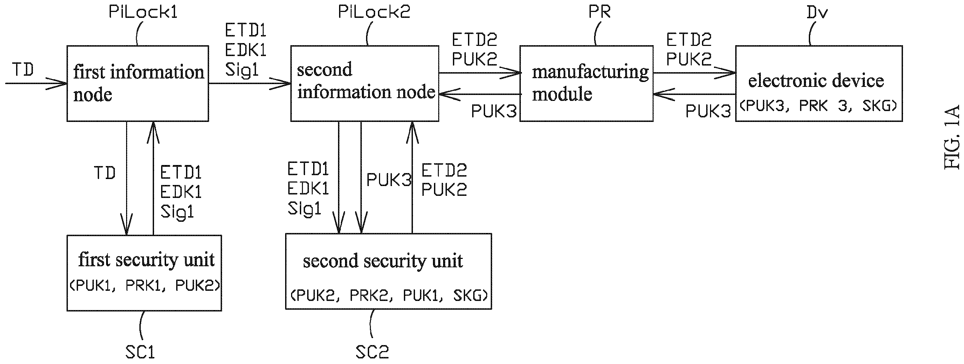

Please refer to FIG. 1A for an embodiment of a system for securely transmitting electronic information of the invention. The system for securely transmitting electronic information of the invention comprises a first information node PiLock1, a second information node PiLock2, a first security unit SC1 and a second security unit SC2. The first security unit SC1 is connected to the first information node PiLock1, and the second security unit SC2 is connected to the second information node PiLock2. In this embodiment, the first information node PiLock1 can be an information device installed in a development unit, and the second information node PiLock2 can be an information device installed in a production management unit. The first security unit SC1 can be a smart card that can be inserted into the information device of the first information node PiLock1, and the second security unit SC2 can be another smart card that can be inserted into the information device of the second information node PiLock2. Transmission of information of the second information node PiLock2 is connected to a manufacturing module PR, that is, the manufacturing module PR can be disposed at the second information node PiLock2 or at another location outside the second information node PiLock2, and the second information node PiLock2 and the manufacturing module PR can be manufacturing equipment in a production unit of an electronic device.

The first information node PiLock1 obtains an electronic information TD corresponding to an electronic device Dv from the development unit. Before the first information node PiLock1 transmits the electronic information TD, the first information node PiLock1 transmits the electronic information TD to the first security unit SC1 for encryption and signature, and then generates a first encrypted electronic information ETD1 and a first signature Sig1. The encrypted and signed first encrypted electronic information ETD1 and the first signature Sig1 are transmitted from the first information node PiLock1 to the second information node PiLock2. The second information node PiLock2 transmits the first encrypted electronic information ETD1 and the first signature Sig1 to the second security unit SC2 for verification in advance to verify that the received first encrypted electronic information ETD1 is from the correct development unit. After passing the verification, the second security unit SC2 decrypts the first encrypted electronic information ETD1 and restores the decrypted first encrypted electronic information ETD1 into the electronic information TD. The electronic device Dv can be a hardware such as microcontroller (MCU), system on a chip (SoC), or Trust Zone technology. The electronic information TD can be a software or firmware program or data that drives the hardware.

The second information node PiLock2 also encrypts the electronic information TD before transmitting the electronic information TD to the manufacturing module PR to generate a second encrypted electronic information ETD2. The second encrypted electronic information ETD2 is transmitted to the electronic device Dv via the manufacturing module PR, and then restored into the electronic information TD after being decrypted in the electronic device Dv. For example, using a burning device to burn an encrypted firmware into a chip, and then decrypt the encrypted firmware in the chip and restore the decrypted firmware into the original unencrypted firmware.

The first security unit SC1 generates a first public key PUK1 and a first private key PRK1, and the second security unit SC2 generates a second public key PUK2 and a second private key PRK2. The first security unit SC1 transmits the first public key PUK1 to the second security unit SC2, so the second security unit SC2 has the first public key PUK1 in addition to the second public key PUK2 and the second private key PRK2. The second security unit SC2 transmits the second public key PUK2 to the first security unit SC1, so the first security unit SC1 has the second public key PUK2 in addition to the first public key PUK1 and the first private key PRK1.

In addition, the second information node PiLock2 transmits a second activation code of the electronic device Dv to the manufacturing module PR. After the manufacturing module PR stores the second activation code into the electronic device Dv, the electronic device Dv generates a third public key PUK3 and a third private key PRK3, and then the manufacturing module PR transmits the third public key PUK3 to the second information node PiLock2, and the second information node PiLock2 transmits the third public key PUK3 to the second security unit SC2. Therefore, the second security unit SC2 also has the third public key PUK3.

The second security unit SC2 and the electronic device Dv can also respectively have a built-in key generator of a key agreement protocol. The key generator of the second security unit SC2 uses the second private key PRK2 and the third public key PUK3 to generate an encryption shared key ESK, and the key generator of the electronic device Dv uses the second public key PUK2 and the third private key PUK3 to generate a decryption shared key DSK. In this embodiment, the key agreement protocol is Elliptic Curve Diffie-Hellman key exchange, and the key generator comprises an algorithm ECDH and a key derivation function KDF of Elliptic Curve Diffie-Hellman key exchange.

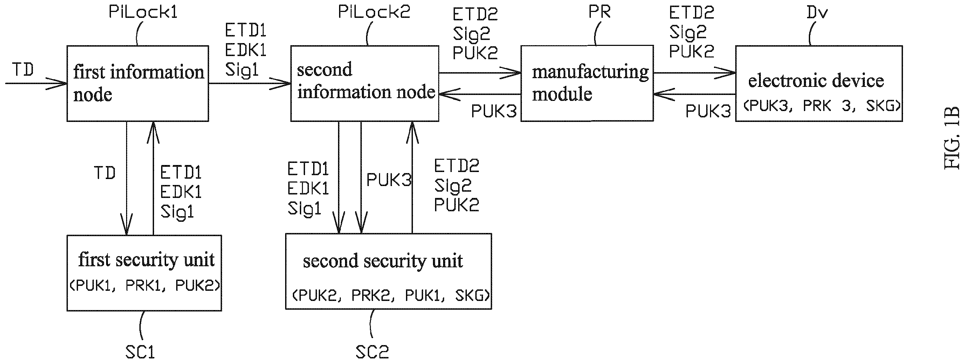

Please refer to FIG. 1B for a block diagram of a second embodiment of the system for securely transmitting electronic information of the invention. The structure of this embodiment is partly the same as that of the first embodiment, so the same elements are given the same symbols and their descriptions are omitted. Differences between this embodiment and the first embodiment lie in the second security unit SC2 signs the second encrypted electronic information ETD2 with the second private key PRK2, and then uses the second public key PUK2 to verify the second encrypted electronic information ETD2 in the electronic device Dv.

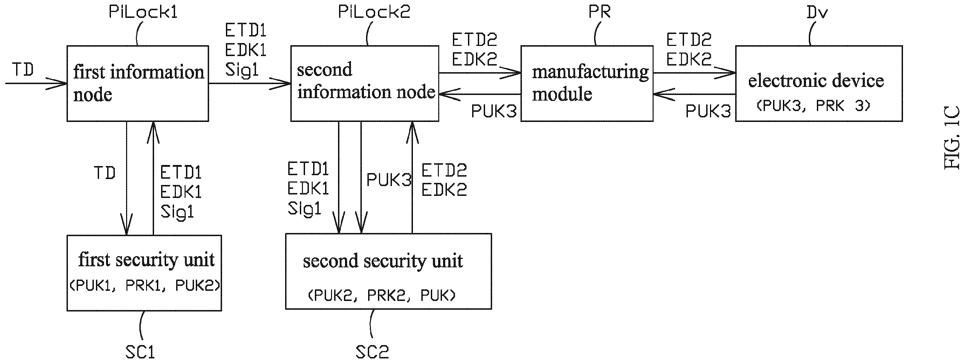

Please refer to FIG. 1C for a block diagram of a third embodiment of the system for securely transmitting electronic information of the invention. The structure of this embodiment is partly the same as that of the first embodiment, so the same elements are given the same symbols and their descriptions are omitted. Differences between this embodiment and the first embodiment lie in the electronic device Dv of this embodiment does not have a built-in key generator SKG, but the second security unit SC2 generates a second key DK2, and the second security unit SC2 uses the second key DK2 to encrypt the electronic information TD to obtain the second encrypted electronic information ETD2. The second key DK2 is encrypted with the second public key PUK2 to obtain a second encrypted key EDK2. The second encrypted electronic information ETD2 and the second encrypted key EDK2 are both transmitted to the electronic device Dv. After the second encrypted key EDK2 is decrypted with the second private key PRK2 in the electronic device Dv, the decrypted second encrypted key EDK2 is restored into the second key DK2, and then the second encrypted electronic information ETD2 is restored into the electronic information TD after being decrypted with the second key DK2.

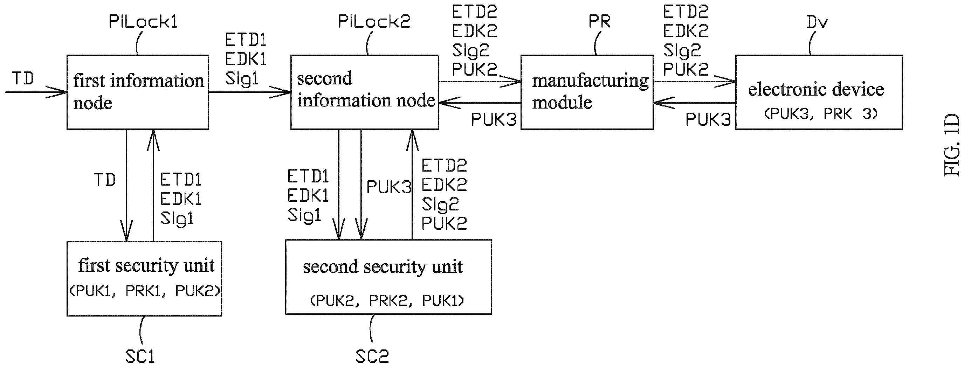

Please refer to FIG. 1D for a block diagram of a fourth embodiment of the system for securely transmitting electronic information of the invention. The structure of this embodiment is partly the same as that of the third embodiment, so the same elements are given the same symbols and their descriptions are omitted. Differences between this embodiment and the third embodiment lie in the second security unit SC2 signs the second encrypted electronic information ETD2 with the second private key PRK2, and then uses the second public key PUK2 to verify the second encrypted electronic information ETD2 in the electronic device Dv.

In another embodiment, both the first security unit SC1 and the second security unit SC2 have a built-in key generator that complies with the key agreement protocol. The key generator of the first security unit SC1 uses the first private key PRK1 and the second public key PUK2 to generate the encryption shared key ESK, and the key generator of the second security unit SC2 uses the second private key PRK2 and the first public key PUK1 to generate the decryption shared key DSK. In this embodiment, the key agreement protocol is Elliptic Curve Diffie-Hellman key exchange, and the key generator comprises the algorithm ECDH and the key derivation function KDF of Elliptic Curve Diffie-Hellman key exchange.

Similarly, the second security unit SC2 and the electronic device Dv can also respectively have a built-in key generator of the key agreement protocol. The key generator of the second security unit SC2 uses the second private key PRK2 and the third public key PUK3 to generate the encryption shared key ESK, and the key generator of the electronic device Dv uses the second public key PUK2 and the third private key PUK3 to generate the decryption shared key DSK. In this embodiment, the key agreement protocol is Elliptic Curve Diffie-Hellman key exchange, and the key generator comprises the algorithm ECDH and the key derivation function KDF of Elliptic Curve Diffie-Hellman key exchange.

The following describes a method for securely transmitting electronic information of the invention, which is implemented using the system for securely transmitting electronic information of the invention.

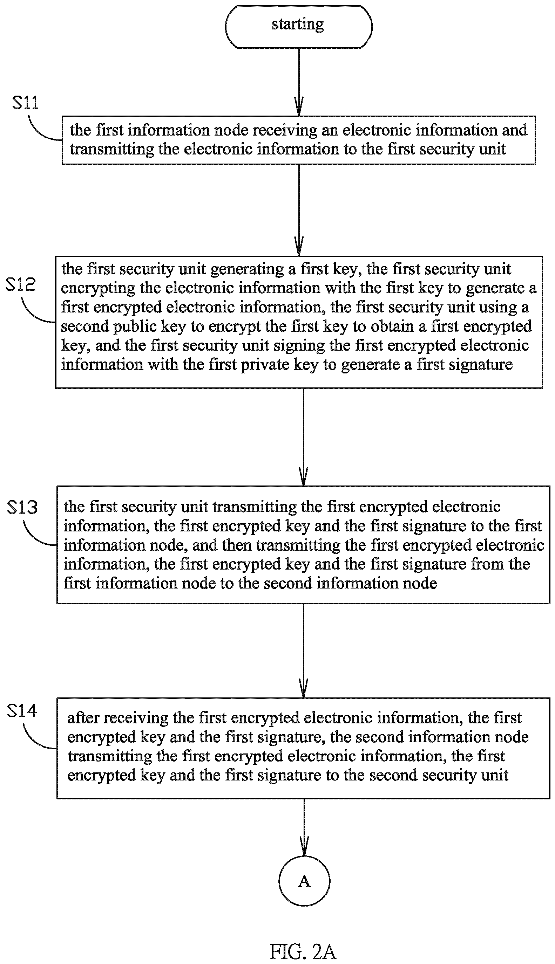

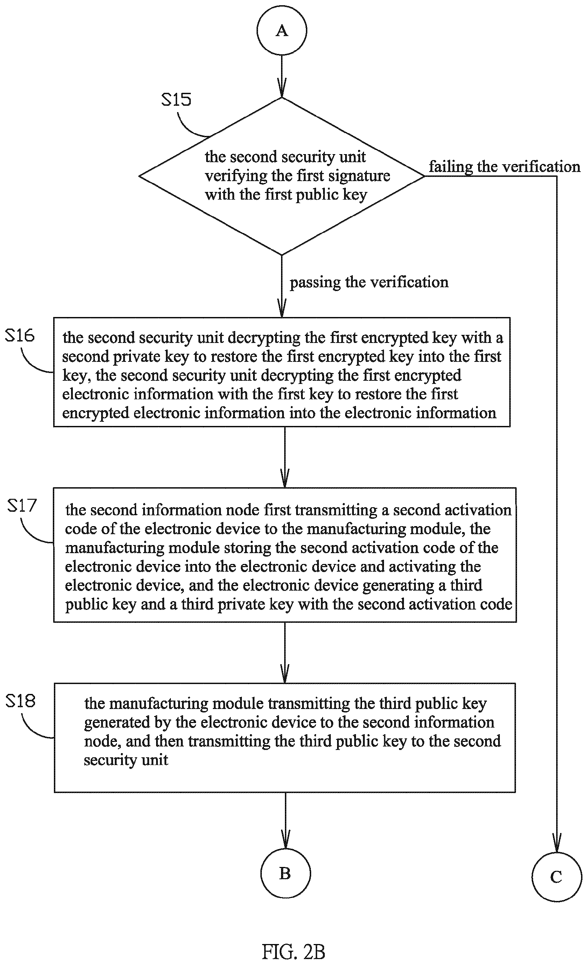

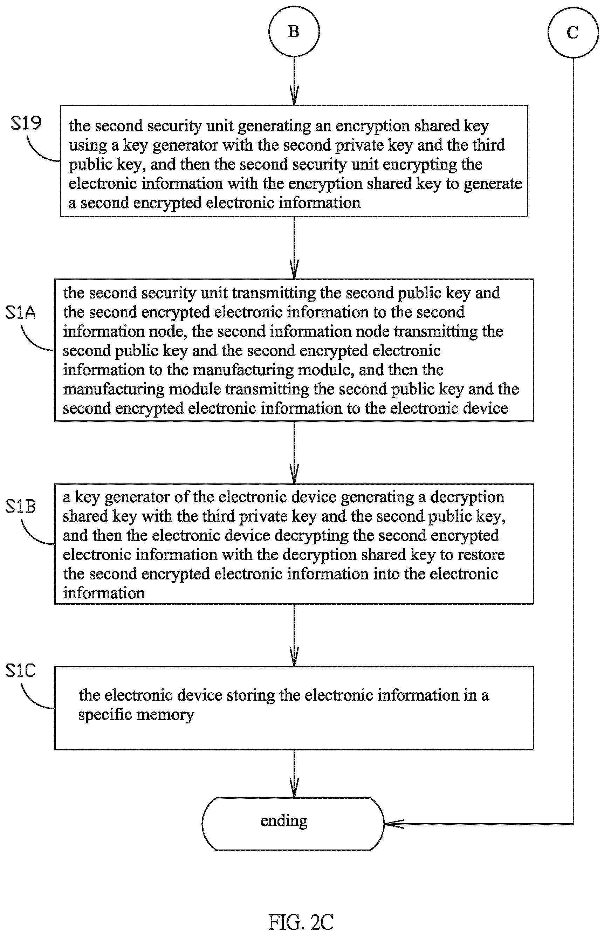

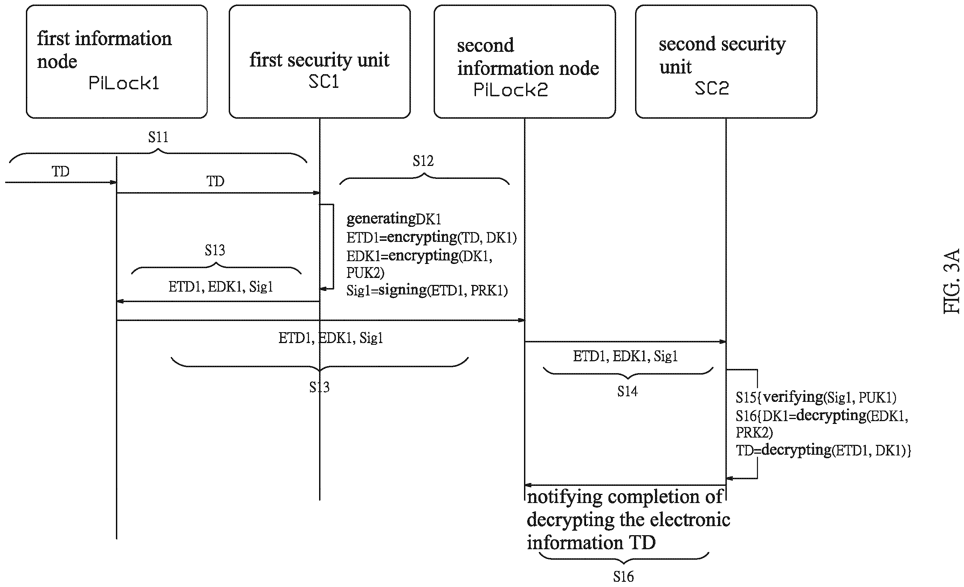

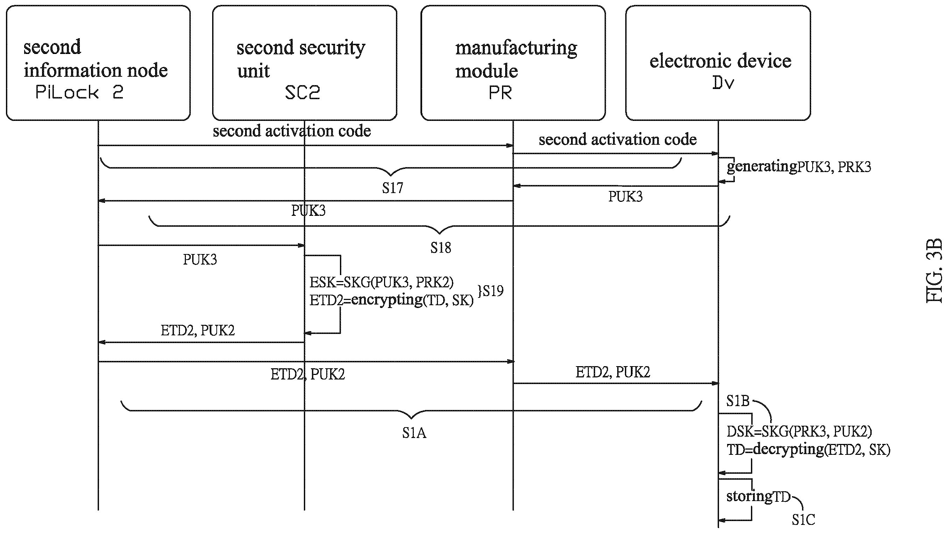

Please refer to FIGS. 2A to 2C and FIGS. 3A and 3B at the same time for a method for securely transmitting electronic information of the invention. The method for securely transmitting electronic information in this embodiment is implemented by the first embodiment of the system for securely transmitting electronic information shown in FIG. 1A. In this embodiment, the second security unit SC2 and the electronic device Dv both have the built-in key generator SKG complying with the key agreement protocol, but the electronic device Dv does not have the built-in second public key PUK2.

Firstly, in step S11, the first information node PiLock1 receiving an electronic information TD and transmitting the electronic information TD to the first security unit SC1. As mentioned above, the electronic information TD can be a software or firmware program or data. Then proceeding to step S12.

In step S12, the first security unit SC1 generating a first key DK1, the first security unit SC1 encrypting the electronic information TD with the first key DK1 to generate the first encrypted electronic information ETD1, the first security unit SC1 using the second public key PUK2 to encrypt the first key DK1 to obtain a first encrypted key EDK1, and the first security unit SC1 signing the first encrypted electronic information ETD1 with the first private key PRK1 to generate the first signature Sig1. Then proceeding to step S13.

In step S13, the first security unit SC1 transmitting the first encrypted electronic information ETD1, the first encrypted key EDK1 and the first signature Sig1 to the first information node PiLock1, and then transmitting the first encrypted electronic information ETD1, the first encrypted key EDK1 and the first signature Sig1 from the first information node PiLock1 to the second information node PiLock2. Then proceeding to step S14.

In step S14, after receiving the first encrypted electronic information ETD1, the first encrypted key EDK1 and the first signature Sigl, the second information node PiLock2 transmitting the first encrypted electronic information ETD1, the first encrypted key EDK1 and the first signature Sig1 to the second security unit SC2. Then proceeding to step S15.

In step S15, the second security unit SC2 verifying the first signature Sig1 with the first public key PUK1. If the first signature Sig1 fails the verification, it means that the first encrypted electronic information ETD1 is not from the correct development unit, and the process ends. If the first signature Sig1 passes the verification, it means that the first encrypted electronic information ETD1 comes from the correct development unit, then proceeding to step S16.

In step S16, the second security unit SC2 decrypting the first encrypted key EDK1 with the second private key PRK2 to restore the first encrypted key EDK1 into the first key DK1, the second security unit SC2 decrypting the first encrypted electronic information ETD1 with the first key DK1 to restore the first encrypted electronic information ETD1 into the electronic information TD, and then notifying the second information node PiLock2 that the electronic information TD having been decrypted. Then proceeding to step S17.

In step S17, the second information node PiLock2 first transmitting the second activation code of the electronic device Dv to the manufacturing module PR, the manufacturing module PR storing the second activation code of the electronic device Dv into the electronic device Dv and activating the electronic device Dv, and the electronic device Dv generating the third public key PUK3 and the third private key PRK3 with the second activation code. Then proceeding to step S18.

In step S18, the manufacturing module PR transmitting the third public key PUK3 generated by the electronic device Dv to the second information node PiLock2, and then transmitting the third public key PUK3 to the second security unit SC2. Then proceeding to step S19.

In step S19, the second security unit SC2 generating an encryption shared key ESK using the key generator SKG with the second private key PRK2 and the third public key PUK3, and then the second security unit SC2 encrypting the electronic information TD with the encryption shared key ESK to generate the second encrypted electronic information ETD2. Then proceeding to step S1A.

In step S1A, the second security unit SC2 transmitting the second public key PUK2 and the second encrypted electronic information ETD2 to the second information node PiLock2, the second information node PiLock2 transmitting the second public key PUK2 and the second encrypted electronic information ETD2 to the manufacturing module PR, and then the manufacturing module PR transmitting the second public key PUK2 and the second encrypted electronic information ETD2 to the electronic device Dv. Then proceeding to step S1B.

In step S1B, since the electronic device Dv having the built-in key generator SKG, the key generator SKG of the electronic device DV generating the decryption shared key DSK with the third private key PRK3 and the second public key PUK2, and then the electronic device Dv decrypting the second encrypted electronic information ETD2 with the decryption shared key DSK to restore the second encrypted electronic information ETD2 into the electronic information TD. Then proceeding to step S1C.

In step S1C, the electronic device Dv storing the electronic information TD in a specific memory. For example, the chip stores a decrypted and restored firmware in a flash memory.

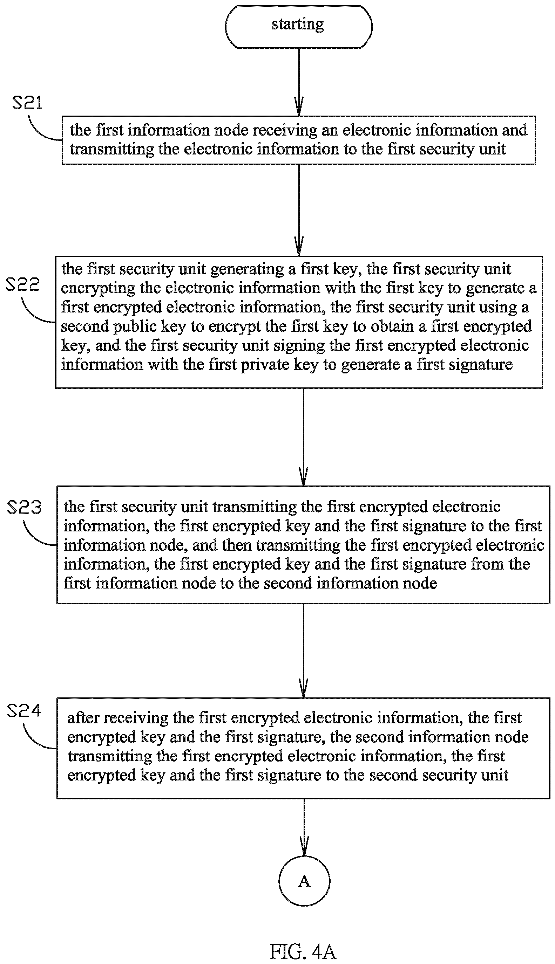

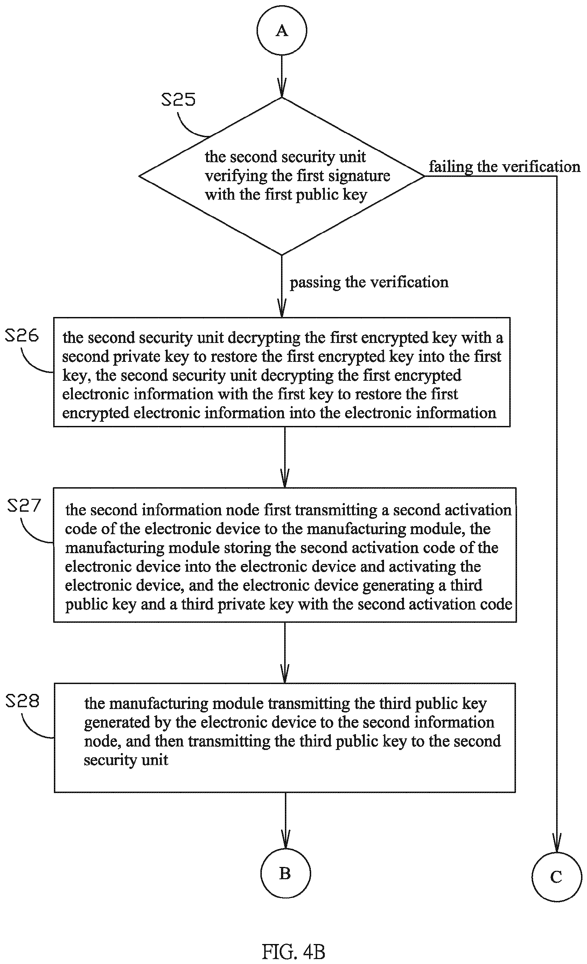

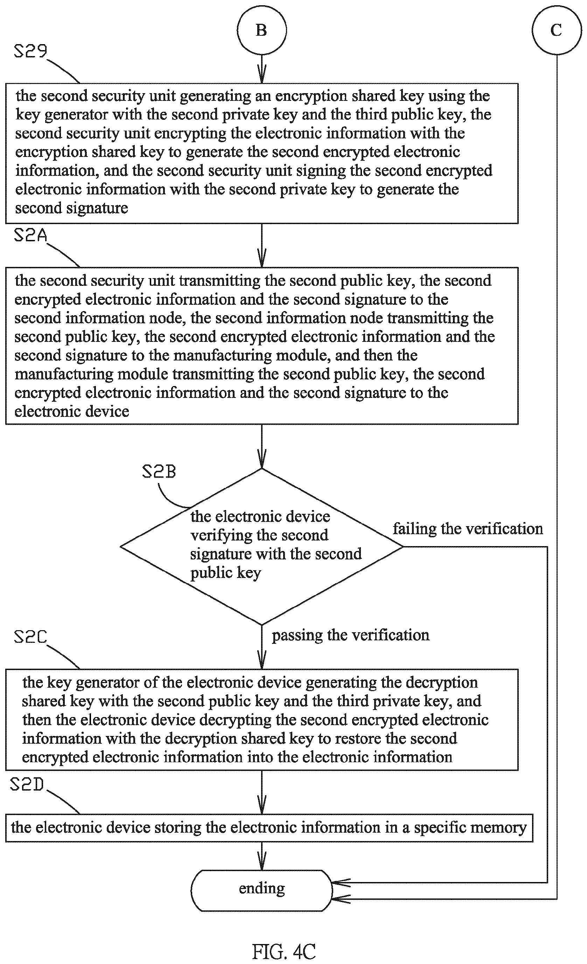

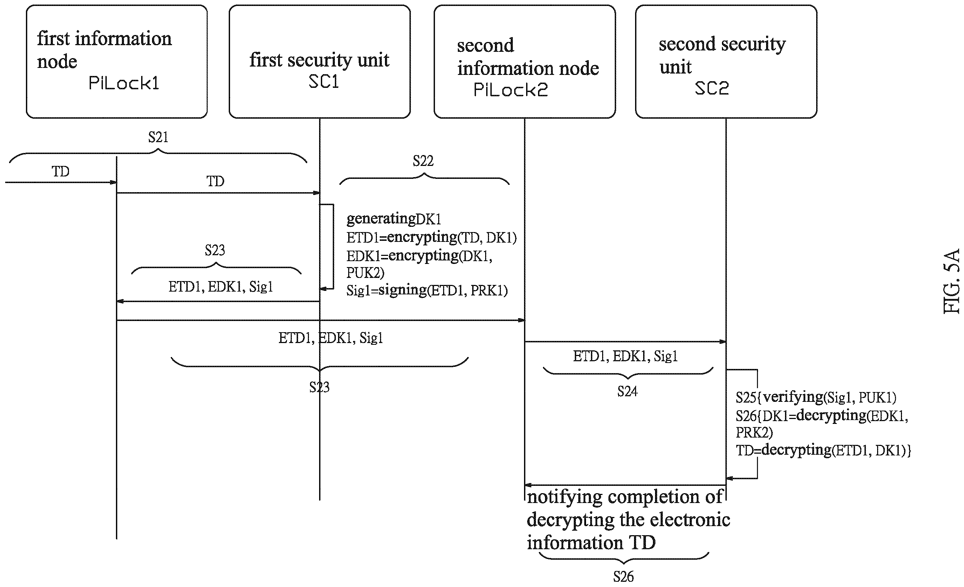

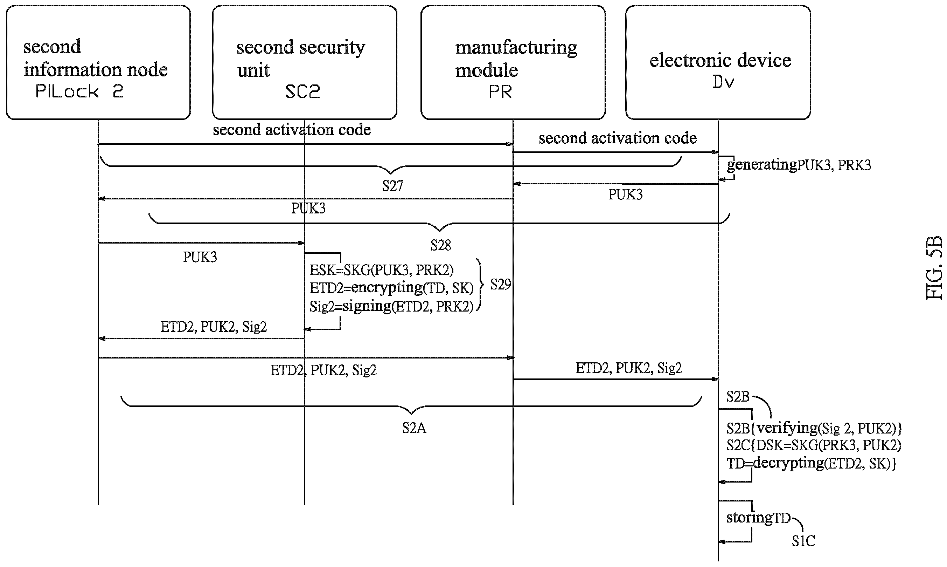

Please refer to FIGS. 4A to 4C and FIGS. 5A and 5B for a second embodiment of the method for securely transmitting electronic information of the invention. The method for securely transmitting electronic information in this embodiment is implemented by the second embodiment of the system for securely transmitting electronic information shown in FIG. 1B. The system for securely transmitting electronic information used in this embodiment is the same as that of the first embodiment, that is, the second security unit SC2 and the electronic device Dv both have the built-in key generator SKG complying with the key agreement protocol.

In the process of this embodiment, transmitting the electronic information TD to the first security unit SC1 via the first information node PiLock1 for encryption and signature, transmitting the first encrypted electronic information ETD1 and the first signature Sig1 from the first information node PiLock1 To the second information node PiLock2, and the steps of the second security unit SC2 performing verification and decryption to restore into the electronic information TD being the same as those of the first embodiment, and steps S21 to S26 of this embodiment being the same as steps S11 to S16 of the first embodiment, and thus will not be repeated here. In addition, the second information node PiLock2 transmitting the second activation code of the electronic device Dv to the manufacturing module PR, after the manufacturing module PR storing the second activation code in the electronic device Dv and activating the electronic device Dv, the electronic device Dv generating the third public key PUK3 and the third private key PRK3, and the steps of transmitting the third public key PUK3 to the second security unit SC2 via the manufacturing module PR and the second information node PiLock2 being also the same as those of the first embodiment. Therefore, steps S27 to S28 in this embodiment are the same as steps S17 to S 18 in the first embodiment, and thus will not be repeated here.

In step S29 of this embodiment, the second security unit SC2 generating an encryption shared key ESK using the key generator SKG with the second private key PRK2 and the third public key PUK3, the second security unit SC2 encrypting the electronic information TD with the encryption shared key ESK to generate the second encrypted electronic information ETD2, and the second security unit SC2 signing the second encrypted electronic information ETD2 with the second private key PRK2 to generate the second signature Sig2. Then proceeding to step S2A.

In step S2A, the second security unit SC2 transmitting the second public key PUK2, the second encrypted electronic information ETD2 and the second signature Sig2 to the second information node PiLock2, the second information node PiLock2 transmitting the second public key PUK2, the second encrypted electronic information ETD2 and the second signature Sig2 to the manufacturing module PR, and then the manufacturing module PR transmitting the second public key PUK2, the second encrypted electronic information ETD2 and the second signature Sig2 to the electronic device Dv. Then proceeding to step S2B.

In step S2B, the electronic device Dv verifying the second signature Sig2 with the second public key PUK2. If the second signature Sig2 fails the verification, it means that the second encrypted electronic information ETD2 is not from the correct development unit, and the procedure is terminated at this time. If the second signature Sig2 passes the verification, then proceed to step S2C. In step S2C, the key generator SKG of the electronic device DV generating the decryption shared key DSK with the second public key PUK2 and the third private key PRK3, and then the electronic device Dv decrypting the second encrypted electronic information ETD2 with the decryption shared key DSK to restore the second encrypted electronic information ETD2 into the electronic information TD. Then proceeding to step S2D.

In step S2D, the electronic device Dv storing the electronic information TD in a specific memory. For example, the chip stores a decrypted and restored firmware in a flash memory.

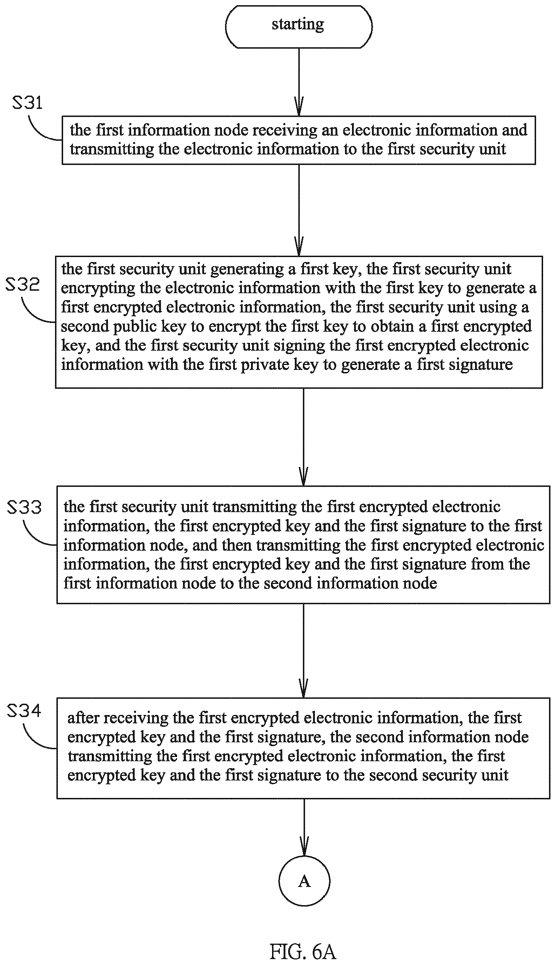

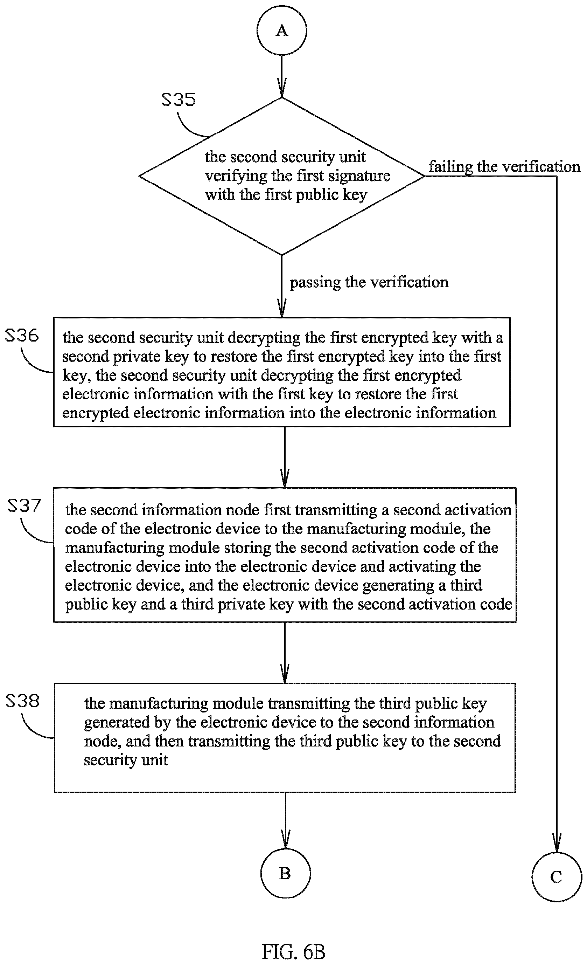

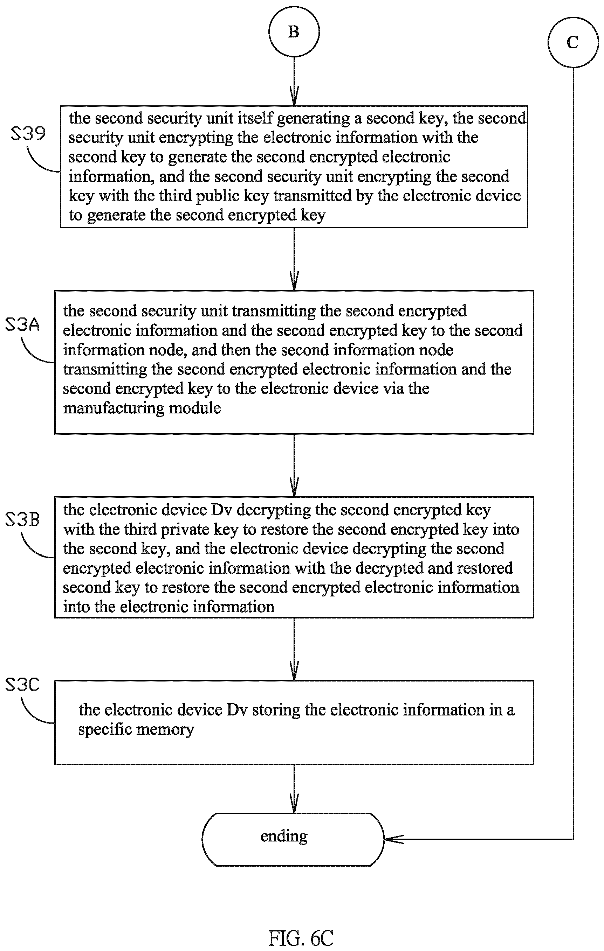

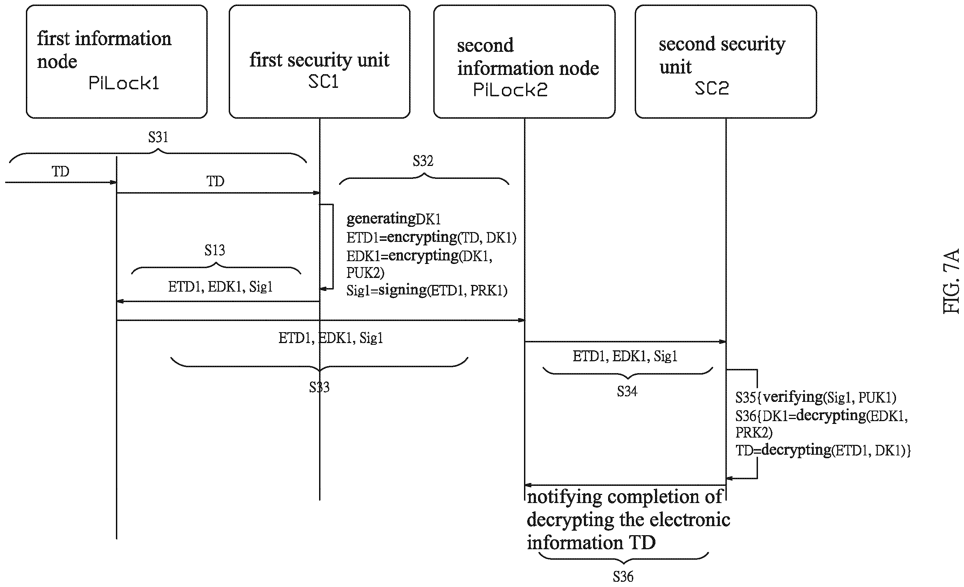

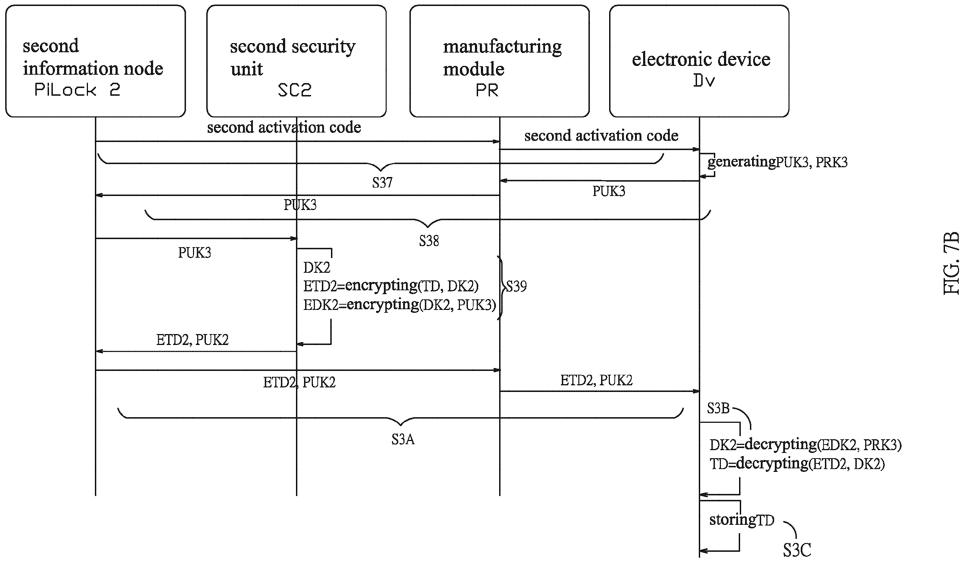

Please refer to FIGS. 6A to 6C and FIGS. 7A and 7B for a third embodiment of the method for securely transmitting electronic information of the invention. The method for securely transmitting electronic information in this embodiment is implemented by the third embodiment of the system for securely transmitting electronic information shown in FIG. 1C. The electronic device Dv of the system for securely transmitting electronic information used in this embodiment does not have the built-in key generator SKG conforming to the key agreement protocol, and the electronic device Dv also does not have the built-in second public key PUK2 generated by the second security unit SC2.

In the process of this embodiment, transmitting the electronic information TD to the first security unit SC1 via the first information node PiLock1 for encryption and signature, transmitting the first encrypted electronic information ETD1 and the first signature Sig1 from the first information node PiLock1 to the second information node PiLock2, and the steps of the second security unit SC2 performing verification and decryption to restore into the electronic information TD being the same as those of the first embodiment, and steps S31 to S36 of this embodiment being the same as steps S11 to S16 of the first embodiment, and thus will not be repeated here. In addition, the second information node PiLock2 transmitting the second activation code of the electronic device Dv to the manufacturing module PR, after the manufacturing module PR storing the second activation code in the electronic device Dv and activating the electronic device Dv, the electronic device Dv generating the third public key PUK3 and the third private key PRK3, and the steps of transmitting the third public key PUK3 to the second security unit SC2 via the manufacturing module PR and the second information node PiLock2 being also the same as those of the first embodiment. Therefore, steps S37 to S38 in this embodiment are the same as steps S17 to S 18 in the first embodiment, and thus will not be repeated here.

In step S39, since the second security unit SC2 of this embodiment does not have a built-in key generator, the second security unit SC2 does not use the key agreement protocol method to generate an encrypted key. In order to encrypt the electronic information TD, the second security unit SC2 itself generating a second key DK2, the second security unit SC2 encrypting the electronic information TD with the second key DK2 to generate the second encrypted electronic information ETD2, and the second security unit SC2 encrypting the second key DK2 with the third public key PUK3 transmitted by the electronic device Dv to generate the second encrypted key EDK2. Then proceeding to step S3A.

In step S3A, the second security unit SC2 transmitting the second encrypted electronic information ETD2 and the second encrypted key EDK2 to the second information node PiLock2, and then the second information node PiLock2 transmitting the second encrypted electronic information ETD2 and the second encrypted key EDK2 to the electronic device Dv via the manufacturing module PR.

In step S3B, the electronic device Dv decrypting the second encrypted key EDK2 with the third private key PRK3 to restore the second encrypted key EDK2 into the second key DK2, and the electronic device Dv decrypting the second encrypted electronic information ETD2 with the decrypted and restored second key DK2 to restore the second encrypted electronic information ETD2 into the electronic information TD. Then proceeding to step S3C.

In step S3C, the electronic device Dv storing the electronic information TD in a specific memory. For example, the chip stores a decrypted and restored firmware in a flash memory.

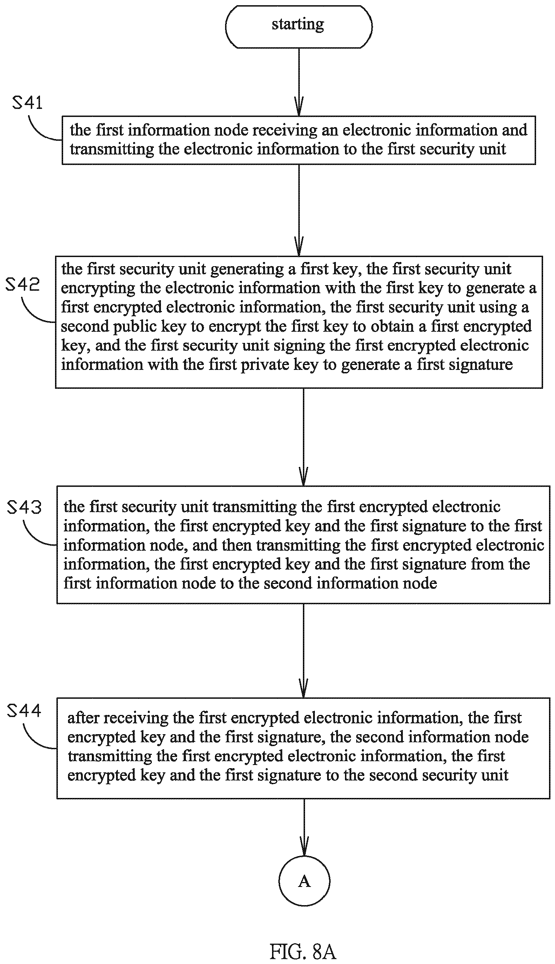

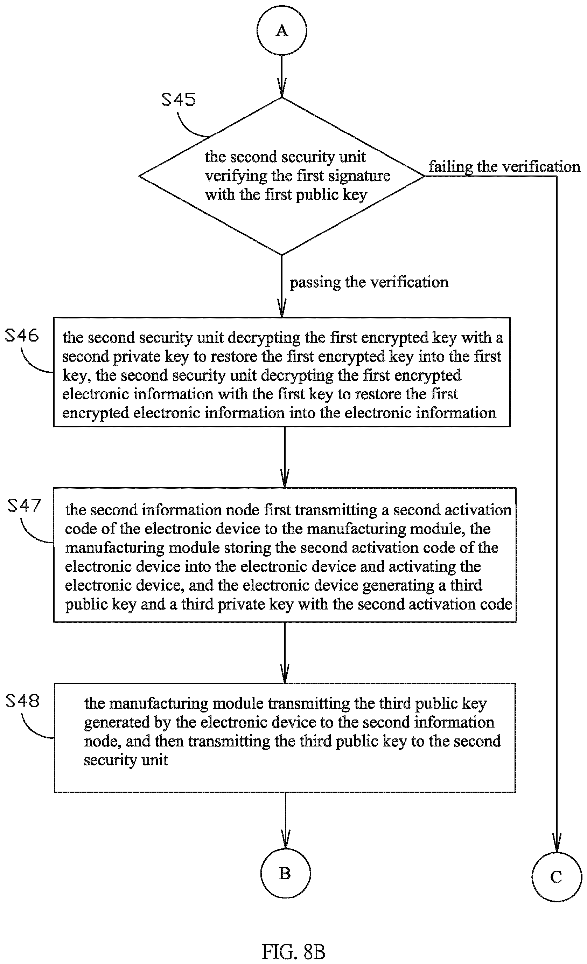

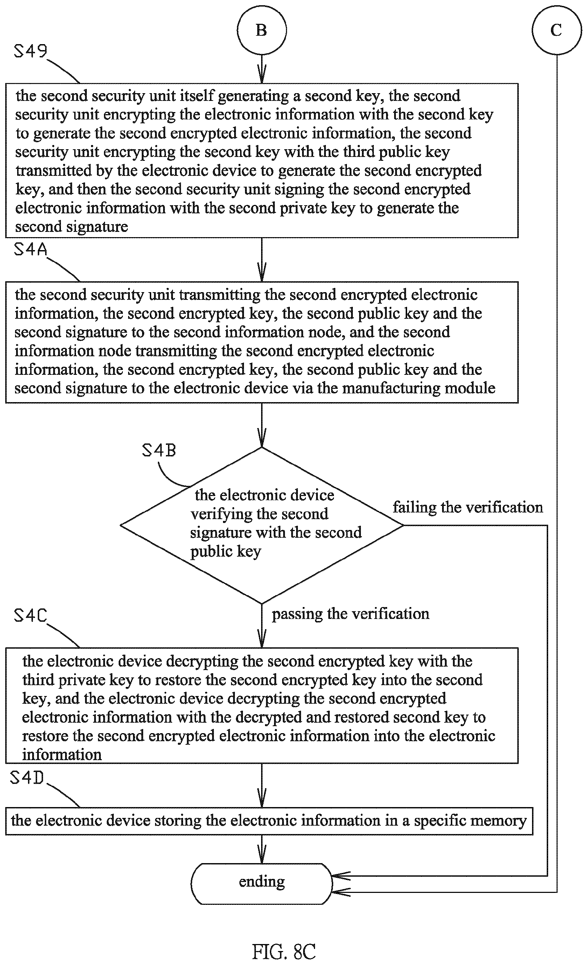

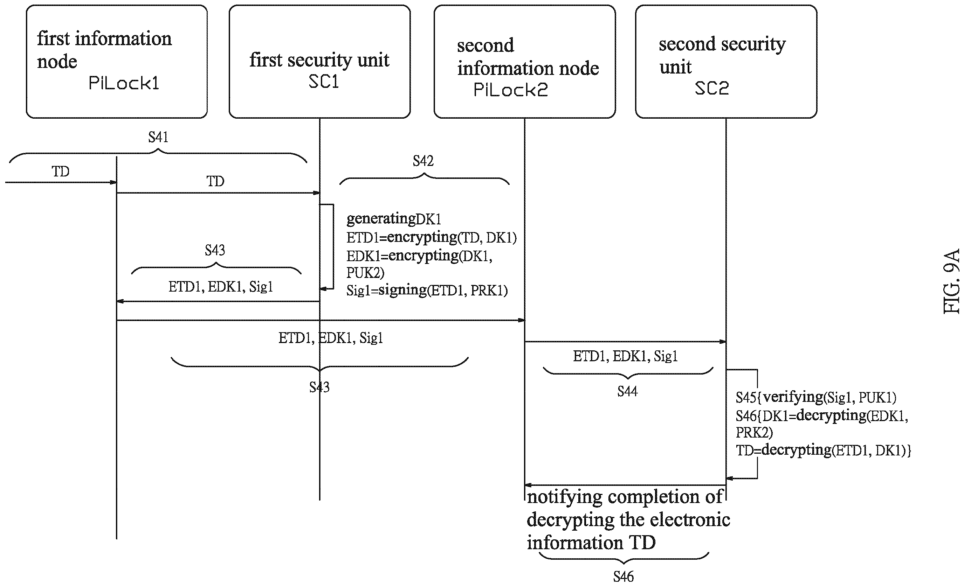

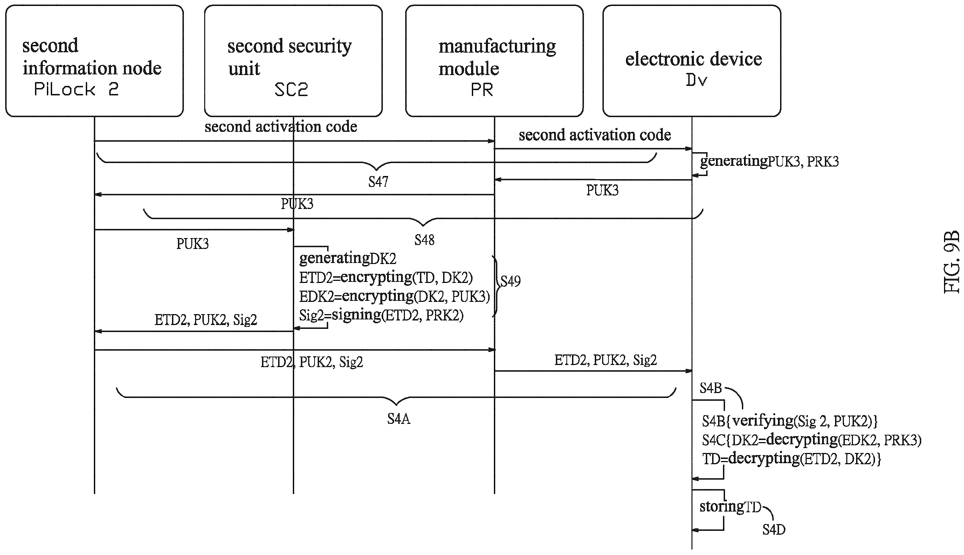

Please refer to FIGS. 8A to 8C and FIGS. 9A and 9B for a fourth embodiment of the method for securely transmitting electronic information of the invention. The method for securely transmitting electronic information in this embodiment is implemented by the fourth embodiment of the system for securely transmitting electronic information shown in FIG. 1D. The electronic device Dv of the system for securely transmitting electronic information used in this embodiment does not have the built-in key generator SKG conforming to the key agreement protocol.

In the process of this embodiment, transmitting the electronic information TD to the first security unit SC1 via the first information node PiLock1 for encryption and signature, transmitting the first encrypted electronic information ETD1 and the first signature Sig1 from the first information node PiLock1 to the second information node PiLock2, and the steps of the second security unit SC2 performing verification and decryption to restore into the electronic information TD being the same as those of the first embodiment, and steps S41 to S46 of this embodiment being the same as steps S1 to S16 of the first embodiment, and thus will not be repeated here. In addition, the second information node PiLock2 transmitting the second activation code of the electronic device Dv to the manufacturing module PR, after the manufacturing module PR storing the second activation code in the electronic device Dv and activating the electronic device Dv, the electronic device Dv generating the third public key PUK3 and the third private key PRK3, and the steps of transmitting the third public key PUK3 to the second security unit SC2 via the manufacturing module PR and the second information node PiLock2 being also the same as those of the first embodiment. Therefore, steps S47 to S48 in this embodiment are the same as steps S17 to S 18 in the first embodiment, and thus will not be repeated here.

In step S49, the second security unit SC2 itself generating a second key DK2, the second security unit SC2 encrypting the electronic information TD with the second key DK2 to generate the second encrypted electronic information ETD2, the second security unit SC2 encrypting the second key DK2 with the third public key PUK3 transmitted by the electronic device Dv to generate the second encrypted key EDK2, and then the second security unit SC2 signing the second encrypted electronic information ETD2 with the second private key PRK2 to generate the second signature Sig2. Then proceeding to step S4A.

In step S4A, the second security unit SC2 transmitting the second encrypted electronic information ETD2, the second encrypted key EDK2, the second public key PUK2 and the second signature Sig2 to the second information node PiLock2, and the second information node PiLock2 transmitting the second encrypted electronic information ETD2, the second encrypted key EDK2, the second public key PUK2 and the second signature Sig2 to the electronic device Dv via the manufacturing module PR. Then proceeding to step S4B.

In step S4B, the electronic device Dv verifying the second signature Sig2 with the second public key PUK2, if the second signature Sig2 fails the verification, the process ends. If the second signature Sig2 passes the verification, then proceed to step S4C. In step S4C, the electronic device Dv decrypting the second encrypted key EDK2 with the third private key PRK3 to restore the second encrypted key EDK2 into the second key DK2, and the electronic device Dv decrypting the second encrypted electronic information ETD2 with the decrypted and restored second key DK2 to restore the second encrypted electronic information ETD2 into the electronic information TD. Then proceeding to step S4D.

In step S4D, the electronic device Dv storing the electronic information TD in a specific memory. For example, the chip stores a decrypted and restored firmware in a flash memory.

In another embodiment, the electronic device Dv can also have the built-in second public key PUK2, so the second security unit SC2 only needs to transmit the second encrypted electronic information ETD2, the second encrypted key EDK2 and the second signature Sig2 to the manufacturing module PR. The electronic device Dv can use its built-in second public key PUK2 for verification.

In another embodiment, the second security unit SC2 directly encrypting the electronic information TD with the third public key PUK3 to generate the second encrypted electronic information ETD2, and then after transmitting the second encrypted electronic information ETD2 to the electronic device Dv, the electronic device Dv decrypting the second encrypted electronic information ETD2 with the third private key PRK3 to restore the second encrypted electronic information ETD2 into the electronic information TD.

In another embodiment, the first security unit SC1 can also have the built-in key generator the same as that of the second security unit SC2 complying with the key agreement protocol. The key generator of the first security unit SC1 generating the encryption shared key ESK with the first private key PRK1 and the second public key PUK2, and encrypting the electronic information TD with the encryption shared key ESK, and then the key generator of the second security unit SC2 generating the decryption shared key DSK with the second private key PRK2 and the first public key PUK1, and the second security unit SC2 decrypting the first encrypted electronic information ETD1 with the decryption shared key DSK to obtain the electronic information TD.

In the system and the method for securely transmitting electronic information of the invention, when the electronic information is transmitted between the information nodes, the transmitted electronic information can be encrypted and signed, and then the electronic information is verified and decrypted at the receiving information node, thereby a validity of the transmitted electronic information can be verified to prevent the electronic information from being stolen or copied, and increase the security of transmission of the electronic information.

However, the above is merely the preferred embodiments of the invention, and should not be used to limit the scope of implementation of the invention, that is, simple equivalent changes and modifications made according to the claims and description of the invention are still within the scope of the invention. In addition, any one of the embodiments or the claims of the invention does not have to achieve all the objects or advantages or features disclosed in the invention. Furthermore, the abstract and the title are merely used to assist in searching for patent documents, and are not used to limit the claims of the invention. In addition, the terms "first" and "second" and the like mentioned in this specification or the claims are merely used to name the elements or to distinguish the different embodiments or scope, and are not used to limit upper or lower limit of a quantity of the elements.

## Claims

1. A system for securely transmitting electronic information used to securely transmit an electronic information to an electronic device, comprising: a first information node, a first security unit, a second information node, a second security unit and a manufacturing module; the first security unit being connected to the first information node, the first information node receiving the electronic information, the first security unit having a first public key, a first private key and a second public key, wherein the first public key and the first private key are generated from the first security unit, the second public key is generated from the second security unit; and
the second security unit being connected to the second information node, transmission of information of the second information node being connected to the manufacturing module, the manufacturing module being connected to the electronic device, the second security unit having the second public key, a second private key and the first public key, wherein the second public key and the second private key are generated from the second security unit, and the first public key is generated from the first security unit.

2. The system for securely transmitting electronic information as claimed in claim 1, wherein the first security unit generates a first key and encrypts the electronic information with the first key to generate a first encrypted electronic information, signs the first encrypted electronic information with the first private key, and encrypts the first key with the second public key to generate a first encrypted key, and the signed first encrypted electronic information and the first encrypted key are transmitted to the second security unit via the first information node and the second information node;
the second security unit verifies the signed first encrypted electronic information, after passing the verification, the second security unit decrypts the first encrypted key with the second private key to restore the first encrypted key into the first key, and decrypts the verified first encrypted electronic information with the first key to restore the first encrypted electronic information into the electronic information; and
the electronic information is transmitted via the second information node and the manufacturing module using a security mechanism and the electronic information is stored in the electronic device.

3. The system for securely transmitting electronic information as claimed in claim 1, wherein both the first security unit and the second security unit have a built-in key generator that complies with a key agreement protocol, the key generator of the first security unit generates an encryption shared key, the electronic information is encrypted with the encryption shared key to generate a first encrypted electronic information, the first encrypted electronic information is transmitted to the second security unit via the first information node and the second information node, the key generator of the second security unit generates a decryption shared key, and the second security unit decrypts the first encrypted electronic information with the decryption shared key to restore the first encrypted electronic information into the electronic information; and
the electronic information is transmitted via the second information node and the manufacturing module using a security mechanism and the electronic information is stored in the electronic device.

4. The system for securely transmitting electronic information as claimed in any one of claims 2 and 3, wherein the security mechanism is that the electronic device generates a third public key and a third private key, the third public key is transmitted to the second security unit via the manufacturing module and the second information node, the second security unit encrypts the electronic information with the third public key to generate a second encrypted electronic information, the second encrypted electronic information is transmitted to the electronic device via the second information node and the manufacturing module, and is decrypted by the electronic device with the third private key to restore the second encrypted electronic information into the electronic information and the electronic information is stored in the electronic device.

5. The system for securely transmitting electronic information as claimed in any one of claims 2 and 3, wherein the security mechanism is that the electronic device generates a third public key and a third private key, the third public key is transmitted to the second security unit via the manufacturing module and the second information node, the second security unit generates a second key and encrypts the electronic information with the second key to generate a second encrypted electronic information, the second security unit encrypts the second key with the third public key to generate a second encrypted key, the second encrypted electronic information and the second encrypted key are transmitted to the electronic device via the second information node and the manufacturing module, the electronic device decrypts the second encrypted key with the third private key to restore the second encrypted key into the second key, and the electronic device decrypts the second encrypted electronic information with the second key to restore the second encrypted electronic information into the electronic information and stores the electronic information in the electronic device.

6. The system for securely transmitting electronic information as claimed in any one of claims 2 and 3, wherein the security mechanism is that both the second security unit and the electronic device have a built-in key generator that complies with a key agreement protocol, the key generator of the second security unit generates an encryption shared key, the electronic information is encrypted with the encryption shared key to generate a second encrypted electronic information, the second encrypted electronic information is transmitted to the electronic device via the second information node and the manufacturing module, the key generator of the electronic device generates a decryption shared key, and the electronic device decrypts the second encrypted electronic information with the decryption shared key to restore the second encrypted electronic information into the electronic information and the electronic information is stored in the electronic device.

7. A method for securely transmitting electronic information comprising steps of:
providing a first information node, a second information node, a first security unit and a second security unit, connecting the first security unit to the first information node, connecting the second security unit to the second information node, connecting transmission of information of the second information node to a manufacturing module;
the first security unit generating a first public key and a first private key, the second security unit generating a second public key and a second private key;
the first security unit transmitting the first public key to the second security unit, the second security unit transmitting the second public key to the first security unit;
encrypting and signing an electronic information corresponding to an electronic device by the first security unit connected to the first information node to generate a first encrypted electronic information;
transmitting the first encrypted electronic information to the second information node, verifying and decrypting the first encrypted electronic information by the second security unit to restore the verified and decrypted first encrypted electronic information into the electronic information; and
transmitting the electronic information via the second information node and the manufacturing module using a security mechanism and storing the electronic information in the electronic device.

8. The method for securely transmitting electronic information as claimed in claim 7, further comprising steps of:
the first security unit generating a first key;
the first security unit encrypting the electronic information with the first key to generate the first encrypted electronic information;
the first security unit signing the first encrypted electronic information with the first private key, and encrypting the first key with the second public key to generate a first encrypted key;
transmitting the signed first encrypted electronic information and the first encrypted key to the second security unit via the first information node and the second information node;
the second security unit verifying the signed first encrypted electronic information;
if the first encrypted electronic information passing the verification, the second security unit decrypting the first encrypted key with the second private key to restore the first encrypted key into the first key; and
the second security unit decrypting the verified first encrypted electronic information with the first key to restore the verified first encrypted electronic information into the electronic information.

9. The method for securely transmitting electronic information as claimed in claim 7, further comprising steps of:
providing a key generator complying with a key agreement protocol in the first security unit and the second security unit respectively;
the key generator of the first security unit generating an encryption shared key, and encrypting the electronic information with the encryption shared key to generate a first encrypted electronic information;
transmitting the first encrypted electronic information to the second security unit via the first information node and the second information node; and
the key generator of the second security unit generating a decryption shared key, and the second security unit decrypting the first encrypted electronic information with the decryption shared key to restore the first encrypted electronic information into the electronic information.

10. The method for securely transmitting electronic information as claimed in claim 7, wherein the security mechanism comprises following steps of:
the electronic device generating a third public key and a third private key;
transmitting the third public key to the second security unit via the manufacturing module and the second information node;
the second security unit encrypting the electronic information with the third public key to generate a second encrypted electronic information; and
transmitting the second encrypted electronic information to the electronic device via
the second information node and the manufacturing module, and the electronic device decrypting the second encrypted electronic information with the third private key to restore the second encrypted electronic information into the electronic information.

11. The method for securely transmitting electronic information as claimed in claim 7, wherein the security mechanism comprises following steps of:
the electronic device generating a third public key and a third private key;
transmitting the third public key to the second security unit via the manufacturing module and the second information node;
the second security unit generating a second key and encrypting the electronic information with the second key to generate a second encrypted electronic information;
the second security unit encrypting the second key with the third public key to generate a second encrypted key;
transmitting the second encrypted electronic information and the second encrypted key to the electronic device via the second information node and the manufacturing module;
the electronic device decrypting the second encrypted key with the third private key to restore the second encrypted key into the second key; and
the electronic device decrypting the second encrypted electronic information with the second key to restore the second encrypted electronic information into the electronic information.

12. The method for securely transmitting electronic information as claimed in claim 7, wherein the security mechanism comprises following steps of:
providing a key generator complying with a key agreement protocol in the second security unit and the electronic device respectively;
the key generator of the second security unit generating an encryption shared key, and encrypting the electronic information with the encryption shared key to generate a second encrypted electronic information;
transmitting the second encrypted electronic information to the electronic device via the second information node and the manufacturing module; and
the key generator of the electronic device generating a decryption shared key, and the electronic device decrypting the second encrypted electronic information with the decryption shared key to restore the second encrypted electronic information into the electronic information.
